# EUROPÄISCHE PATENTSCHRIFT

(11) **EP 1 666 739 B1**
(45) Veröffentlichungstag und Bekanntmachung des Hinweises auf die Patenterteilung: **16.04.2008**
(21) Anmeldenummer: 04027883.0
(22) Anmeldetag: 24.11.2004
(51) Int. Cl.: F16B 12/18, F16B 12/30, F16B 23/00, A47C 21/00

(54) **Halteelement**
Holding element
Elément de soutien

(43) Veröffentlichungstag der Anmeldung: 07.06.2006
(73) Patentinhaber: Derungs Licht AG, 9200 Gossau (CH)
(72) Erfinder: Schmollinger, Peter, 9212 Arnegg (CH); Reutegger, Walter, 9200 Gossau (CH)
(74) Vertreter: Hepp, Dieter

(56) Entgegenhaltungen:
- DE-A1- 10 309 441
- US-A- 1 462 498
- US-A- 1 677 269

## Beschreibung

Die Anmeldung betrifft ein Halteelement zum Anbringen einer Lampe an einem Körper, insbesondere einem Rahmen, und eine Verwendung des Halteelements.

Aus dem Stand der Technik sind vielfältige Elemente bekannt, die zur Befestigung von Verbindungen für Stangen oder Rohre miteinander dienen.

Als ein Beispiel für eine Querverbindung zeigt DE 299 18 829 U1 eine Klemmbefestigung zur Befestigung an einem stangenartigen Körper, bei dem es sich um einen Bettrahmen handeln kann, mit einem Klemmstück, welches eine Ausnehmung aufweist, mit der das Klemmstück in einer Ausrichtung radial zur Längserstreckung des Körpers auf diesen seitlich aufsetzbar ist. Die Klemmbefestigung umgreift den Körper und kann auch im befestigten Zustand gegenüber dem Körper verrutscht, verdreht oder verschoben werden.

Eine Klemmeinrichtung zur Befestigung eines Leuchtenarms an einer Bettreling als ein Beispiel für einen Körper, ist in DE 299 22 167 U1 offenbart. Die Klemmeinrichtung besteht aus einem Spannband, das zumindest einseitig lösbar mit dem Leuchtenarm verbunden ist. Es ist vorgesehen, dass sich das Spannband an die Aussenfläche des Körpers anpasst und einen Reibschluss mit dem Körper bildet. Dazu müssen die Abmessungen des Spannbandes und des Körpers genau aufeinander abgestimmt sein, eine Montage der Klemmeinrichtung an verschiedene Körper ist nur bei erhöhtem Aufwand, zum Beispiel durch einen Austausch des Spannbandes, möglich.

Die DE 103 09 441 A1 beschreibt eine Montagevorrichtung zum Verbinden von zwei Platten. Ein scheibenförmiger Gegenhalter und ein Halteblech werden mittels einer Sicherungsmutter, welche stirnseitig eine Riffelung aufweist, auf einem Gewindestab gehalten. Ein Antriebritzel bildet zusammen mit der Riffelung ein Kronenradgetriebe zum Festschrauben der Sicherungsmutter.

In der US 1,677,269 wird eine Verbindungsvorrichtung mit einer Gewindeschraube und einer Mutter mit jeweils einem konischen Senkkopf und einem darüber angeordneten Vierkant Abschnitt gezeigt. Die Vierkant Abschnitte werden nach dem Verbinden von der Mutter und der Schraube abgetrennt, so dass die Verbindung nicht mehr gelöst werden kann.

Die US 1462498 schlägt eine Lampenbefestigung vor, bei welcher eine Gewindestange durch eine Öffnung eines Bettrahmens geführt wird. Die Kontur eines Befestigungssockels der Lampe ist der Aussenkontur des Bettrahmens angepasst. Der Sockel wird mit einer Gegenmutter auf der Gewindestange am Bettrahmen fixiert.

Die Aufgabe der Erfindung besteht darin, die Nachteile aus dem Stand der Technik zu überwinden und insbesondere ein Lampenhalter mit einem Halteelement zu schaffen, das geeignet ist, in einer Querrichtung zu einem Rahmen, insbesondere einem Bettrahmen, angebracht zu werden, das in der Lage ist, eine feste Verbindung mit dem Körper herzustellen, und das an Körpern mit unterschiedlichen Aussendurchmessern sowie mit Öffnungen des Körpers mit unterschiedlichen Durchmessern eingesetzt werden kann.

Der Körper soll dabei zwei gegenüberliegende Öffnungen aufweisen, oder mit derartigen Öffnungen versehen werden

Die Aufgabe wird gelöst durch ein Lampenhalter mit einem Halteelement gemäss den Merkmalen des Anspruchs 1. Das Halteelement zum Anbringen an einem Körper mit zwei gegenüberliegenden Öffnungen enthält wenigstens ein erstes und ein zweites Adapterelement zum Anordnen in jeder der Öffnungen, welche durch wenigstens ein Verbindungselement verbindbar sind und formschlüssig in den Öffnungen haltbar sind.

Bei dem Körper handelt es sich bevorzugt um einen Rahmen, ein Rohr, eine Stange, ein Profil, eine Leiste, eine Reling oder einen Körper, der in einer Ausdehnungsrichtung eine grössere Dimension besitzt als in den dazu senkrechten Ausdehnungsrichtungen. Handelt es sich um einen massiven Körper, so bildet der Raum zwischen den beiden Öffnungen bevorzugt einen Kanal, bei einem profilierten Körper oder einem Rohr bietet der Hohlraum zwischen den beiden Öffnungen bevorzugt Platz zur Durchführung eines Verbindungselements durch beide Öffnungen.

Durch die Lage der Adapterelemente zueinander, also durch die Anordnung der Öffnungen auf dem Körper wird eine Verbindungsrichtung definiert. Sind die Öffnungen an den Seiten des Körpers angebracht, welche eine längere Ausdehnung aufweisen als die übrigen Seiten, so wird eine Querverbindung zwischen dem Halteelement und dem Körper ermöglicht. Eine Längsverbindung kann durch entsprechende Anordnung der Öffnungen ebenso ermöglicht werden.

Die Adapterelemente besitzen eine konische oder teilkugelförmige Aussenkontur. Die Adapterlemente können sich dann formschlüssig in Öffnungen verschiedenster Durchmesser anpassen, wenn die jeweils verjüngten Enden zu einander, bzw. in das Innere der Öffnungen, weisen.

Die formschlüssige Halterung der Adapterelemente verhindert eine Relativbewegung des Halteelements gegenüber dem Körper. Bevorzugt wird der Formschluss dadurch erzeugt, dass zumindest ein Teil eines Adapters in eine Öffnung hineinragt.

Das Vorhandensein mindestens zweier, also separater, Adapterelemente für die jeweiligen Öffnungen erlaubt die Verwendbarkeit des Halteelements für Körper verschiedener Durchmesser, da zwischen den Adapterelementen kein vorgegebener Abstand besteht. Der Abstand wird allenfalls durch die Dimensionierung des Verbindungselements begrenzt.

Bei dem mindestens einen Verbindungselement kann es sich um eine Spange, eine Stange, ein Rohr, eine Feder, eine Schraube, ein anders ausgeführtes Element oder um eine Kombination derartiger Elemente handeln. Das mindestens eine Verbindungselement stellt eine Verbindung zwischen den Adapterelementen her und kann je nach Ausführung dazu geeignet sein, eine Spannkraft zwischen den Adapterelementen zu erzeugen oder zu unterstützen.

Die Verbindung zwischen den Adapterelementen erfolgt bevorzugt über ein Verbindungselement, sie kann jedoch auch mehrteilig ausgeführt sein, zum Beispiel durch aneinander gekoppelte oder durch ineinander geführte Elemente.

An dem Halteelement, insbesondere an dem mindestens einen Verbindungselement, ist eine Aufnahmevorrichtung zum Anbringen eines Funktionselements vorgesehen. Damit ist das Halteelement geeignet, eine Verbindung zwischen dem Körper und einem Funktionselement herzustellen. Die Aufnahmevorrichtung ist an dem mindestens einen Verbindungselement anbringbar, z.B. anschraubbar oder anklemmbar, oder ist einteilig mit dem mindestens einen Verbindungselement ausgeführt.

Während es sich bei dem Körper bevorzugt um einen Teil eines Bettes, insbesondere eines Krankenhausbettes, handelt, betrifft das Funktionselement eine Lampe.

In einer bevorzugten Ausführungsform ist das wenigstens eine Verbindungselement durch die Öffnungen führbar. Das Verbindungselement muss nicht um den Körper herumgeführt und an dessen Umfang angepasst werden. Die Stabilisierung des Halteelements erfolgt nicht allein durch dessen Bauteile, also durch die Adapterelemente und das Verbindungselement, sondern auch durch den Körper, an welchem das Halteelement angebracht ist.

In einer vorteilhaften Ausführung sind die Öffnungen an der Ober- und an der Unterseite des Körpers angebracht. Das Verbindungselement stellt dann eine vertikale Verbindung zwischen dem unteren und dem oberen Adapterelement her. Das Funktionselement kann so angebracht sein, dass eine Last an dem Verbindungselement hängt oder auf das Verbindungselement drückt. In jedem Fall wird die Last durch mindestens ein Adapterelement und die Öffnungen auf den Körper weitergeleitet, ohne dass durch einen Abstand zu dem Körper einen Hebelwirkung entsteht.

Bevorzugt ist das wenigstens eine Verbindungselement durch mindestens ein Adapterelement führbar. Dazu weist das mindestens eine Adapterelement einen entsprechenden Durchführungskanal auf. Die Durchführung erlaubt dem Adapterelement das Einnehmen verschiedener Positionen gegenüber dem mindestens einen Verbindungselement, wobei es die Ausrichtung gegenüber dem anderen Adapterelement beibehält. Ein Adapterelement kann fest mit dem Verbindungselement verbunden oder sogar einteilig mit diesem ausgeführt sein. Verschiedene Abstände der Adapterelemente lassen sich dann durch eine Neupositionierung eines Adapterelements erreichen. Alternativ kann das Verbindungselement durch beide Adapterelemente führbar sein.

Die Adapterelemente sind bevorzugt jeweils einteilig ausgeführt und sie sind bevorzugt rotationssymmetrisch bezüglich der Verbindungsachse zwischen den Adapterelementen. Alternativ können sie auch aus Teilstücken zusammengesetzt sein und/oder eine flügelartige Struktur besitzen, wobei nur jeweils die Flügel einen Formschluss mit der jeweiligen Öffnung bilden. Die Haltewirkung kann auch mit keilförmigen Adapterstücken erzeugt werden.

Adapterelemente mit einer symmetrischen, konischen oder teilkugelförmigen Aussenkontur haben den Vorteil, dass sie das Verbindungselement bezüglich der Öffnungen ausrichten, bei einer Durchführung des Verbindungselements sogar in den Öffnungen zentrieren.

Die Adapterelemente können an dem mindestens einen Verbindungselement anklemmbar, anklebbar, anschweissbar sein.

Bevorzugt besitzt jedoch das wenigstens eine Verbindungselement zumindest auf einem Teilstück ein Aussengewinde. Auf dieses lässt sich mindestens eine Mutter aufbringen, die zur Befestigung eines Adapterelements dient. Das wenigstens eine Verbindungselement kann auch als Gewindestange ausgeführt sein, der mehrere Muttern vorgesehen sein können, wovon jeweils eine erste zur Positionierung eines Adapterelements und eine zweite zur Konterung der ersten Mutter dienen kann.

Die Adapterelemente können gegeneinander verschraubt und so gegenüber dem Körper verspannt werden.

Bevorzugt weist wenigstens ein Adapterelement einen Durchführungskanal und ein Innengewinde auf, das mit dem mindestens einen Aussengewinde des Verbindungselements zusammenwirkt. Das Adapterelement wirkt dann selbst als eine Mutter, deren Position längs des Verbindungselements verstellbar ist. Mit einer zusätzlichen Kontermutter kann eine bestimmte Position fixiert werden.

Es können auch beide Adapterelemente mit einem Innengewinde versehen sein.

In einer bevorzugten Ausführungsform sind ein Anschlagelement und mindestens ein Spannelement vorgesehen, zwischen denen die Adapterelemente einspannbar sind. Bevorzugt ist ein Anschlagelement fest mit dem mindestens einen Verbindungselement und/oder einem Adapterelement verbunden.

Das Anschlagelement kann auch aus einem Mutternpaar bestehen.

Bei dem Spannelement kann es sich um eine Mutter handeln, wobei die Adapterelemente und der Körper zwischen Mutter und Anschlagelement angeordnet sind. Durch eine Verstellung der Mutter kann eine Spannung gegenüber dem Verbindungselement aufgebaut werden und damit die Adapterelemente gegenüber dem Körper verspannt werden.

Die Spannkraft zwischen den Adapterelementen kann alternativ durch die Federkraft eines Federelements erzeugt werden.

Die Erfindung betrifft ausserdem die Verwendung eines Halteelements wie beschrieben zum Anbringen von Geräten oder Beleuchtungskörpern an einem Bett, insbesondere einem Krankenhausbett.

In Krankenhäusern und Pflegeeinrichtungen ist es oftmals notwendig, den Standort von Betten zu verändern, sei es dass aufgrund von Platzmangel mehr Patienten in einem Zimmer untergebracht werden müssen und dafür die Betten zusammengerückt werden, sei es, dass ein Patient in ein anderes Zimmer verlegt wird. Zu diesem Zweck sind Betten und Zubehör, wie Beistellschrank, Infusionshalter u.ä. in der Regel mobil ausgestattet. Wird ein bettlägeriger Patient verlegt, so kann er in seinem Bett verschoben werden und das Zubehör wird mitgeführt.

Für das Personal ist es bequemer, wenn sich Zubehörteile, insbesondere Monitore, die zur ständigen Überwachung dienen, direkt am Bett befestigen lassen. Das beschriebene Halteelement lässt sich an Gerätehaltern anbringen und dient zur Befestigung des entsprechenden Gerätes an dem Krankenhausbett. Seiten- und/oder Kopfteile von Pflegebetten weisen zumeist ohnehin gegenüberliegende Öffnungen auf, die zur Halterung eines erfindungsgemässen Halteelementes dienen können.

Wird ein Bett an einen neuen Standort verschoben, so kann nicht immer darauf geachtet werden, dass der Patient eine optimale Beleuchtung erhält. Leselampen sind zwar häufig beweglich im Zimmer angebracht, allerdings lässt sich beispielsweise das Lesefeld eines Patienten nicht an jedem Standplatz des Bettes gut ausleuchten.

Es ist daher günstig, eine Lampe direkt an einem Bett zu befestigen. Allerdings benötigen nicht alle Betten eine eigene Lampe und es sollten verschiedene in einer Einrichtung vorkommende Betten mit denselben Lampen bestückbar sein.

Erfindungsgemäss weist daher ein Lampenhalter ein oben beschriebenes Halteelement auf. Mit dem Halteelement lässt sich der Lampenhalter und damit die Lampe an einem Seiten- oder Kopfteil eines Krankenhaus- oder Pflegebetts befestigen. Die Eigenschaften des Halteelements erlauben eine Befestigung an Kopf- oder Seitenteilen unterschiedlicher Dicke mit Öffnungen unterschiedlichen Durchmessers.

Zeichnungen
- Figur 1: zeigt ein Schnittbild eines Beispiels für ein erfindungsgemässes Halteelement;
- Figur 2: zeigt eine schematische Darstellung einer Anordnung eines zweiten Beispiels für ein erfindungsgemässes Halteelement an einem Körper;
- Figur 3: zeigt eine schematische Darstellung eines dritten Beispiels für ein erfindungsgemässes Halteelement;
- Figur 4: zeigt eine schematische Darstellung eines Beispiels für ein Adapterelement;

- Figur 5: zeigt ein schematisches Schnittbild eines weiteren Beispiels für ein Adapterelement;
- Figur 6: zeigt eine schematische Darstellung eines vierten Beispiels für ein erfindungsgemässes Halteelement.

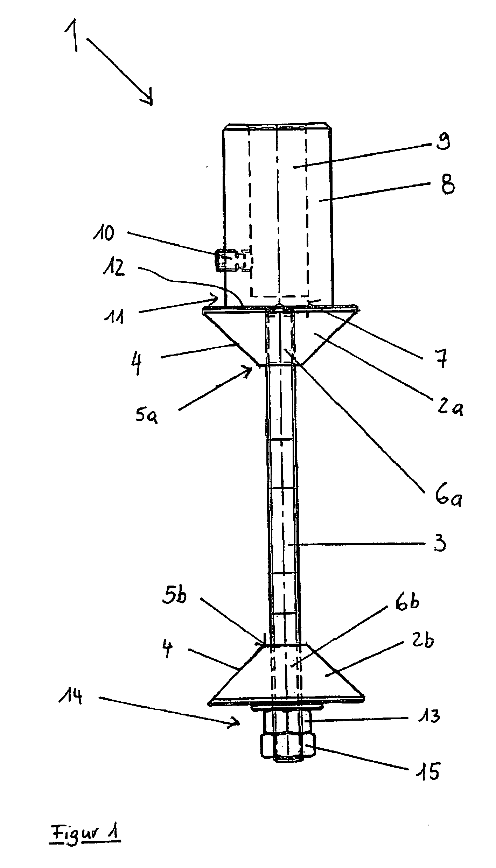

Figur 1 zeigt eine Schnittbild eines Beispiels für ein Halteelement 1. Das Halteelement umfasst ein erstes Adapterelement 2a und ein zweites Adapterelement 2b, welche durch ein Verbindungselement 3 verbunden sind. Das erste und das zweite Adapterelement 2a, 2b besitzen eine konische Aussenkontur 4, die verjüngten Enden 5a, 5b weisen zueinander.

Die Adapterelemente 2a, 2b legen sich formschlüssig an in der Zeichnung nicht dargestellte Öffnungen eines ebenfalls nicht dargestellten Körpers an.

Das Verbindungselement 3 kann durch die Öffnungen des nicht dargestellten Körpers geführt werden und ist ausserdem durch Durchführungskanäle 6a, 6b in den Adapterelementen 2a, 2b geführt.

An einem Ende 7 weist das Verbindungselement 3 eine Aufnahmevorrichtung 8 für ein Funktionselement 9 auf. Das Funktionselement 9 wird mittels einer Schraube 10 fixiert.

Eine Seite 11 der Aufnahmevorrichtung 8 dient gleichzeitig als Anschlagelement 12, gegen welches mit einer Mutter 13, die auf einem nicht näher dargestellten Gewinde auf der anderen Seite 14 des Verbindungselements 3 drehbar ist, eine Spannung erzeugt werden kann. Die Mutter 13 wird mit einer Kontermutter 15 arretiert.

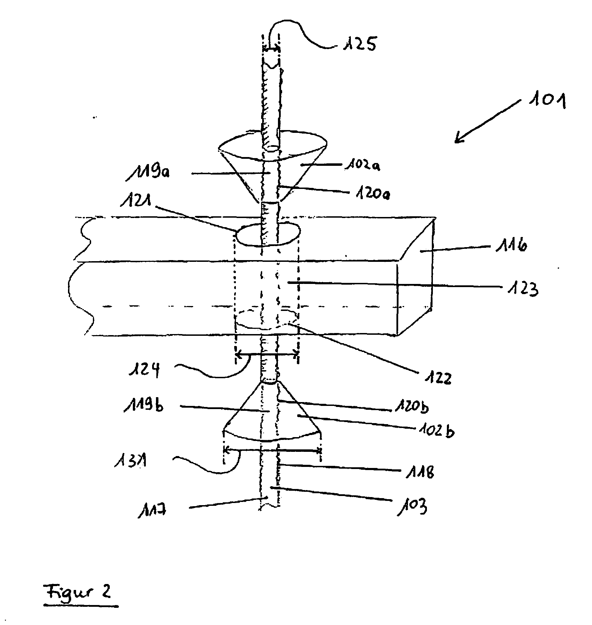

Figur 2 zeigt eine schematische Darstellung einer Anordnung eines zweiten Beispiels für ein Halteelement 101 an einem Körper 116.

Das Halteelement 101 besteht aus einem Verbindungselement 103 in Form einer Gewindestange 117, die ein Aussengewinde 118 besitzt, einem ersten und einem zweiten Adapterelement 102a, 102b. Die Adapterelemente 102a, 102b weisen Durchführungskanäle 119a, 119b mit Innengewinden 120a, 120b auf, welche mit dem Aussengewinde 118 des Verbindungselements 103 zusammenwirken.

Das Verbindungselement 103 ist durch eine erste Öffnung 121 und einen gegenüberliegende Öffnung 122 des Körpers 116 geführt, die einen Kanal 123 in dem Körper 116 bilden. Der Durchmesser 124 des Kanals 123 ist grösser als der Querschnittsdurchmesser 125 des Verbindungselements 103, jedoch kleiner als der maximale Durchmesser 131 der Adapterelemente 102a, 102b.

Zur Halterung werden die Adapterelemente 102a, 102b auf der Gewindestange 117 gegeneinander geschraubt. In einer in der Zeichnung nicht dargestellten Endposition bilden die Adapterelemente 102a, 102b einen Formschluss mit den Öffnungen 121, 122 des Körpers 116. Dadurch wird das Verbindungselement 103 in dem Kanal 123 zentriert und arretiert. Die Adapterelemente 102a, 102b können durch in der Figur nicht dargestellte Kontermutter befestigt werden.

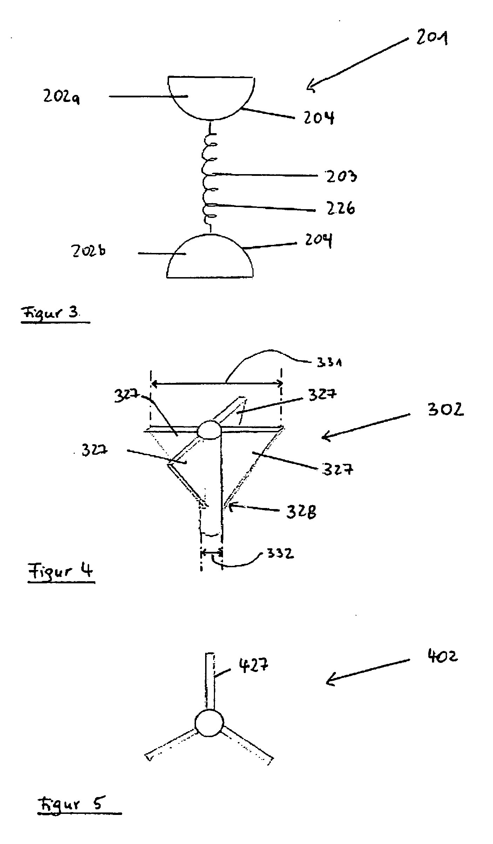

Figur 3 zeigt eine schematische Darstellung eines dritten Beispiels für ein Halteelement 201.

Das Halteelement besteht aus einem Verbindungselement 203 in Form eines Federelements 226. Dieses stellt eine Verbindung zwischen einem ersten Adapterelement 202a und einem zweiten Adapterelement 202b her, die eine teilkugelförmige Aussenkontur 204 aufweisen. Da diese Kontur 204 einen kontinuierlichen Verlauf von Aussendurchmessern besitzt, sind die die Adapterelemente 202a, 202b geeignet, sich formschlüssig in Öffnungen, die in der Figur nicht näher gezeigt sind, mit verschiedenen Durchmessern anzupassen.

Das Verbindungselement 203 ist durch die nicht dargestellten Öffnungen führbar und stellt mit seiner Federkraft eine Spannung zwischen den Adapterelementen 202a, 202b her, so dass diese an dem Körper arretiert werden. Je nach dem Abstand der nicht dargestellten Öffnungen kann ein entsprechend langes und/oder vorgespanntes Federelement 226 gewählt werden.

Figur 4 zeigt eine schematische Darstellung eines Beispiels für ein Adapterelement 302.

Das Adapterelement 302 weist eine flügelartige Struktur auf und besitzt vier Flügel 327. Diese verjüngen sich zu einer Seite 328, sodass sich das Adapterelement 302 formschlüssig in Öffnungen, die in der Figur nicht dargestellt sind, mit verschiedenen Durchmessern anpassen kann, die kleiner sind als der maximale Durchmesser 331 und grösser als der minimale Durchmesser 332 des Adapterelements 302 sind.

Ein Adapterelement 402 kann auch eine andere Anzahl von Flügeln 427 aufweisen, wie in dem schematischen Schnittbild in Figur 5 gezeigt ist, hier besitzt das Adapterelement 402 drei Flügel 427.

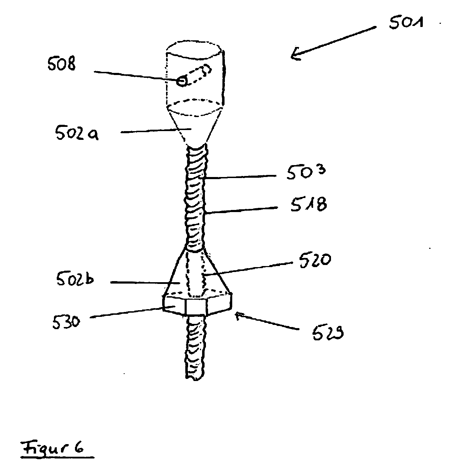

Figur 6 zeigt eine schematische Darstellung eines vierten Beispiels für ein Halteelement 501. Das Halteelement 501 besteht aus einem Verbindungselement 503, das einteilig mit einem ersten Adapterelement 502a verbunden ist. Das Verbindungselement 503 besitzt ein Aussengewinde 518, das mit dem Innengewinde 520 eines zweiten Adapterelements 502b zusammenwirkt. Das zweite Adapterelement 502b weist an seiner dem ersten Adapterelement 502a abgewandten Seite 529 eine Sechskantstruktur 530 auf, sodass es wie eine herkömmliche Mutter mit Standardwerkzeug auf dem Verbindungselement 503 geschraubt werden kann. Das Adapterelement 502a kann mit einer nicht in der Figur dargestellten Kontermutter arretiert werden.

An dem ersten Adapterelement 502a ist eine Aufnahmevorrichtung 508 für ein in der Figur nicht dargestelltes Funktionselement vorgesehen. Das Adapterelement 502a und die Aufnahmevorrichtung 508 sind in diesem Beispiel einstückig ausgeführt.

## Patentansprüche

1. Lampenhalter mit einem_Halteelement (1; 101; 201; 501) zum Anbringen an einem Körper (116), insbesondere einem Rahmen, mit zwei gegenüberliegenden Öffnungen (121, 122), enthaltend wenigstens ein erstes und ein zweites Adapterelement (2a; 2b; 102a, 102b; 202a, 202b; 302; 402; 502a, 502b) zum Anordnen in jeder der Öffnungen (121, 122), wobei an dem Halteelement (1; 101; 201; 501), insbesondere an dem mindestens einen Verbindungselement (3; 103; 203; 503), eine Aufnahmevorrichtung (8; 508) zum Anbringen einer Lampe vorgesehen ist und die Adapterelemente (2a; 2b; 102a, 102b; 202a, 202b; 302; 402; 502a, 502b) durch wenigstens ein Verbindungselement (3; 103; 203; 503) verbindbar sind, **dadurch gekennzeichnet, dass** die Adapterelemente (2a; 2b; 102a, 102b; 202a, 202b; 302; 402; 502a, 502b) eine konische oder teilkugelförmige Aussenkontur (4; 204) besitzen.

2. Lampenhalter gemäss einem der vorhergehenden Ansprüche, **dadurch gekennzeichnet, dass** das wenigstens eine Verbindungselement (3; 103; 203; 503) durch die Öffnungen (121, 122) führbar ist.

3. Lampenhalter gemäss einem der vorhergehenden Ansprüche, **dadurch gekennzeichnet, dass** das wenigstens eine Verbindungselement (3; 103; 203; 503) zumindest teilweise durch mindestens ein Adapterelement (2a; 2b; 102a, 102b; 202a, 202b; 302; 402; 502a, 502b) führbar ist.

4. Lampenhalter gemäss einem der vorhergehenden Ansprüche, **dadurch gekennzeichnet, dass** das wenigstens eine Verbindungselement (3; 103; 203; 503) zumindest auf einem Teilstück ein Aussengewinde (118; 518) besitzt.

5. Lampenhalter gemäss Anspruch 4, **dadurch gekennzeichnet, dass** wenigstens ein Adapterelement (2a; 2b; 102a, 102b; 202a, 202b; 302; 402; 502a, 502b) einen Durchführungskanal (119a, 119b) und ein Innengewinde (120a, 120b; 520) aufweist, das mit dem mindestens einen Aussengewinde (118; 518) des Verbindungselements (3; 103; 203; 503) zusammenwirkt.

6. Lampenhalter gemäss einem der vorhergehenden Ansprüche, **dadurch gekennzeichnet, dass** ein Anschlagelement (12) und mindestens ein Spannelement vorgesehen sind, zwischen denen die Adapterelemente (2a; 2b; 102a, 102b; 202a, 202b; 302; 402; 502a, 502b) einspannbar sind.

7. Verwendung eines Halteelements (1; 101; 201; 501) nach einem der vorhergehenden Ansprüche zum Anbringen von Geräten oder Beleuchtungskörpern an Rahmen von Betten, insbesondere Krankenhausbetten.

## Claims

1. Lamp holder with a retaining element (1, 101, 201, 501) for bringing a body (116), in particular a frame, with two opposite openings (121, 122), containing at least a first and a second adapter element (2a, 2b, 102a, 102b, 202a, 202b, 302, 402, 502a, 502b) into the arrangement in each of the openings (121, 122), by which means on the retaining element (1, 101, 201, 501), in particular on the at least one connection element (3, 103, 203, 503), a suspension device (8, 508) is provided for the mounting of a lamp and the adapter elements (2a, 2b, 102a, 102b, 202a, 202b, 302, 402, 502a, 502b) can be connected by means of at least one connection element (3, 103, 203, 503), **characterised in that** the adapter elements (2a, 2b, 102a, 102b, 202a, 202b, 302, 402, 502a, 502b) have a conical or spherically-shaped outer contour (4, 204).

2. Lamp holder according to one of the preceding claims, **characterised in that** at least one connecting element (3, 103, 203, 503), can be passed through the openings (121, 122).

3. Lamp holder according to one of the preceding claims, **characterised in that** at least one connecting element (3, 103, 203, 503) can at least be partially passed through at least one adapter element (2a, 2b, 102a, 102b, 202a, 202b, 302, 402, 502a, 502b).

4. Lamp holder according to one of the preceding claims, **characterised in that** at least one connecting element (3, 103, 203, 503) has an external thread (118, 518) on at least one section.

5. Lamp holder according to claim 4, **characterised in that** at least one adapter element (2a, 2b, 102a, 102b, 202a, 202b, 302, 402, 502a, 502b) has a through passage/channel (119a, 119b) and an internal thread (120a, 120b, 520), which operates in conjunction with at least one external thread (118, 518) of the connecting element (3, 103, 203, 503).

6. Lamp holder according to one of the preceding claims, **characterised in that** a stop element (12) and at least one clamping element are provided, between which the adapter elements (2a, 2b, 102a, 102b, 202a, 202b, 302, 402, 502a, 502b) can be clamped.

7. Use of a retaining element (1, 101, 201, 501) in accordance with one of the preceding claims for the mounting of equipment or lighting fixtures on the frames of beds, in particular hospital beds.

## Revendications

1. Support de lampe avec un élément de fixation (1 ; 101 ; 201 ; 501) à installer sur un corps (116), en particulier un cadre, pourvu de deux ouvertures opposées (121, 122), comprenant au moins un premier et un second adaptateur (2a ; 2b ; 102a, 102b ; 202a, 202b ; 302 ; 402 ; 502a, 502b) à disposer dans chacune des ouvertures (121, 122), étant précisé qu'il est prévu sur l'élément de fixation (1 ; 101 ; 201 ; 501), en particulier sur le ou les éléments de liaison (3 ; 103 ; 203 ; 503), un dispositif de réception (8 ; 508) pour installer une lampe, et que les adaptateurs (2a ; 2b ; 102a, 102b ; 202a, 202b ; 302 ; 402 ; 502a, 502b) sont aptes à être reliés grâce à au moins un élément de liaison (3 ; 103 ; 203 ; 503),
**caractérisé en ce que** les adaptateurs (2a ; 2b ; 102a, 102b ; 202a, 202b ; 302 ; 402 ; 502a, 502b) ont un contour extérieur (4 ; 204) conique ou en partie sphérique.

2. Support de lampe selon l'une des revendications précédentes, **caractérisé en ce que** le ou les éléments de liaison (3 ; 103 ; 203 ; 503) sont aptes à passer à travers les ouvertures (121, 122).

3. Support de lampe selon l'une des revendications précédentes, **caractérisé en ce que** le ou les éléments de liaison (3 ; 103 ; 203 ; 503) sont aptes à passer au moins en partie à travers au moins un adaptateur (2a ; 2b ; 102a, 102b ; 202a, 202b ; 302 ; 402 ; 502a, 502b).

4. Support de lampe selon l'une des revendications précédentes, **caractérisé en ce que** le ou les éléments de liaison (3 ; 103 ; 203 ; 503) présentent au moins sur une partie un filetage extérieur (118 ; 518).

5. Support de lampe selon la revendication 4, **caractérisé en ce qu'**au moins un adaptateur (2a ; 2b ; 102a, 102b ; 202a, 202b ; 302 ; 402 ; 502a, 502b) présente un conduit de passage (119a, 119b) et un filetage intérieur (120a, 120b ; 520) qui coopère avec le ou les filetages extérieurs (118 ; 518) de l'élément de liaison (3 ; 103 ; 203 ; 503).

6. Support de lampe selon l'une des revendications précédentes, **caractérisé en ce qu'**il est prévu un élément de butée (12) et au moins un élément de serrage entre lesquels les adaptateurs (2a ; 2b ; 102a, 102b ; 202a, 202b ; 302 ; 402 ; 502a, 502b) sont aptes à être serrés.

7. Utilisation d'un élément de fixation (1 ; 101 ; 201 ; 501) selon l'une des revendications précédentes pour installer des appareils ou des lampes sur le cadre de lits, en particulier des lits d'hôpital.
